# EUROPEAN PATENT SPECIFICATION

(11) **EP 3 011 816 B1**
(45) Date of publication and mention of the grant of the patent: **22.04.2020**
(21) Application number: 15187534.1
(22) Date of filing: 30.09.2015
(51) Int. Cl.: A01B 71/06

(54) **COUPLING ASSEMBLY FOR CONNECTING AN IMPLEMENT PROPELLER SHAFT TO A PTO DRIVE OF A TRACTOR**
KUPPLUNGSANORDNUNG ZUR VERBINDUNG EINES PROPELLERSCHAFTS EINES ARBEITSGERÄTS AN EINEN ZAPFWELLENANTRIEB EINES TRAKTORS
ENSEMBLE DE COUPLAGE PERMETTANT DE CONNECTER UN OUTIL D'ARBRE D'HÉLICE À UN ENTRAÎNEMENT DE PRISE DE FORCE D'UN TRACTEUR

(30) Priority: 22.10.2014 US 201414520961
(43) Date of publication of application: 27.04.2016
(73) Proprietor: Deere & Company, Moline, IL 61265 (US)
(72) Inventor: Huegerich, Tony J, Cedar Falls, IA Iowa 50613 (US)
(74) Representative: Dehnhardt, Florian Christopher

(56) References cited:
- WO-A2-2010/026183
- GB-A- 757 399
- US-A- 3 260 541

## Description

The present invention relates to a coupling assembly for connecting an implement propeller shaft to a PTO drive of a tractor, comprising a PTO adapter shaft, the PTO adapter shaft having a first bore which forms internal splines and having a second blind bore extending from the first bore to an end wall which faces towards the first bore, the first bore having a larger diameter and the second blind bore having a smaller diameter, and a PTO stub shaft, the PTO stub shaft having a larger diameter shaft portion with external splines for meshing engagement with the internal splines of the PTO adapter shaft, and having a smaller diameter shaft portion extending away from the larger diameter shaft portion.

WO 2010/026183 A2 shows a tractor PTO drive line comprising an output shaft with a socket in which a PTO stub shaft is received. The socket is provided with splines which mesh with splines on the PTO stub shaft to drive the PTO stub shaft by the output shaft. The PTO stub shaft is retained in the socket by retaining members in the form of steel balls which are radially moveable in bores in the output shaft. The stub shaft is of the type conventionally designed to be driven at 540 or 1000 rpm and is provided with six or twenty-one external drive splines.

Tractors and utility vehicles used for agricultural work may be coupled to implements which have an implement propeller shaft which must be connected to a power take-off (PTO) drive of the tractor. Such implements are not utilized full time with the tractor, so it is desirable that a coupling assembly allows quick, easy removal and reinstallation of the implement. The PTO drive of the tractor may be connected and secured to the implement propeller shaft using a PTO coupling member. Hook up of the PTO coupling member takes time and can be difficult because of its size and location. Thus, there is a need for an improved coupling assembly which allows to connect and disconnect an implement quickly and easily to a PTO drive of a tractor.

These and other objects are achieved by the present invention, wherein a coupling assembly for connecting an implement propeller shaft to a PTO drive of a tractor is provided. The coupling assembly comprises a PTO adapter shaft and a PTO stub shaft.

The PTO adapter shaft has a first bore which forms internal splines and has a second blind bore which extends from the first bore to an end wall which faces towards the first bore. The first bore has a larger diameter and the second blind bore has a smaller diameter. The PTO stub shaft has a larger diameter shaft portion with external splines for meshing engagement with the internal splines of the PTO adapter shaft and has a smaller diameter shaft portion which extends away from the larger diameter shaft portion. The smaller diameter shaft portion has an outer end with a chamfer and first and second journals formed thereon. The first journal is spaced axially apart from the second journal. The first and second journals are slidably received by the second blind bore. The first bore is connected to the second blind bore by an outer tapered bore portion and an inner tapered bore portion.

With this coupling assembly, the operator can leave the PTO adapter shaft connected to the implement propeller shaft. The PTO adapter shaft can easily be connected to the PTO stub shaft that replaces the standard PTO drive shaft of the tractor.

For a complete understanding of the objects, techniques, and structure of the invention reference should be made to the following detailed description and accompanying drawings:
- Fig. 1: is a perspective view of a coupling assembly embodying the invention,
- Fig. 2: is a sectional perspective view of the coupling assembly of Fig. 1,
- Fig. 3: is a perspective view of a PTO adapter shaft being part of the coupling assembly of Fig. 1,
- Fig. 4: is a perspective view of a PTO stub shaft being part of the coupling assembly of Fig. 1,
- Fig. 5: is an enlarged perspective view of a splined portion of the PTO adapter shaft of Fig. 3,
- Fig. 6: is an enlarged perspective view of a splined portion of the PTO stub shaft of Fig. 4,
- Fig. 7: is a sectional view of the coupling assembly of Fig. 1 in a partially assembled condition,
- Fig. 8: is a sectional view of the coupling assembly of Fig. 1 in a fully assembled condition, and
- Fig. 9: is an exploded perspective view of a portion of the coupling assembly of Fig. 2.

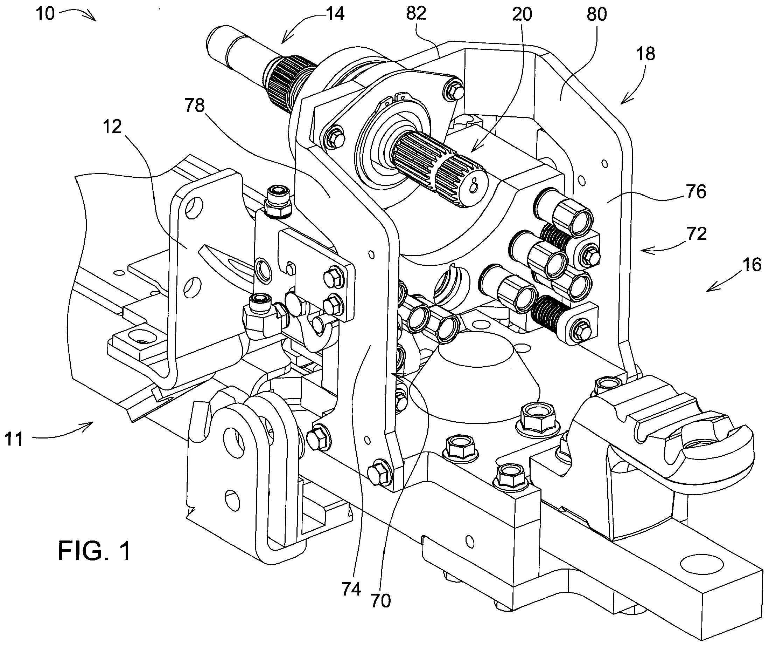

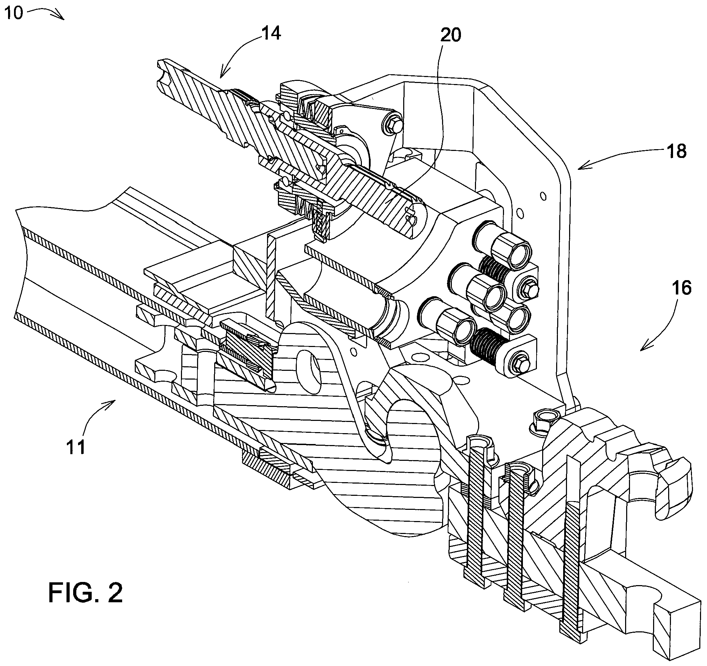

Referring to Figs. 1 and 2, a coupling assembly 10 comprises a tractor pickup hitch 11 with a frame 12 which rotatably supports a PTO stub shaft 14. The PTO stub shaft 14 is adapted to be rotatably driven by a PTO drive (not shown) of the tractor. The tractor pickup hitch 11 is coupled to a coupler unit 16 which is mounted on an implement (not shown). The coupler unit 16 has a housing or coupler frame 18 which rotatably supports a propeller shaft or PTO adapter shaft 20.

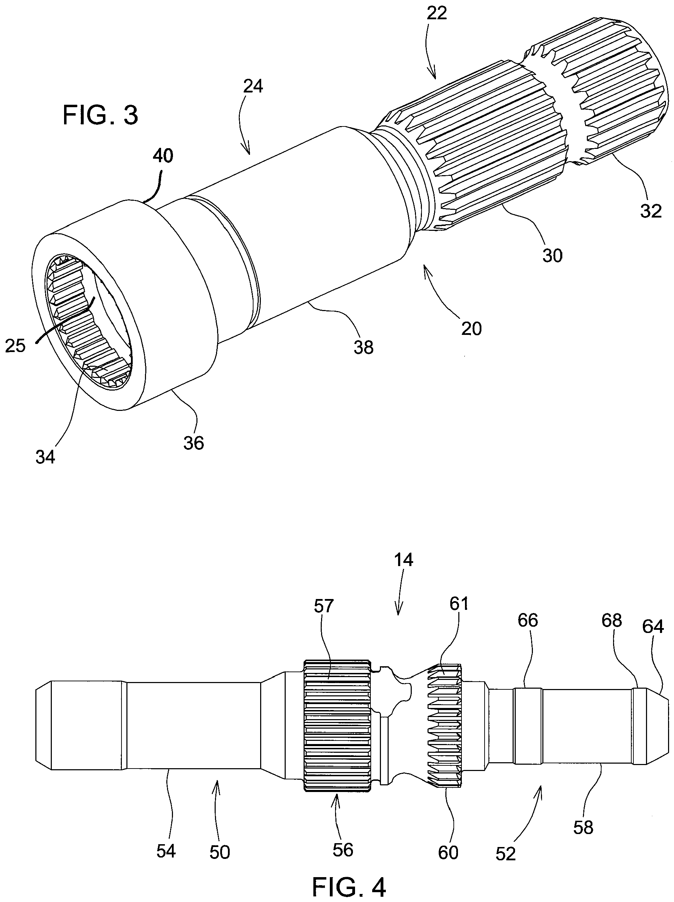

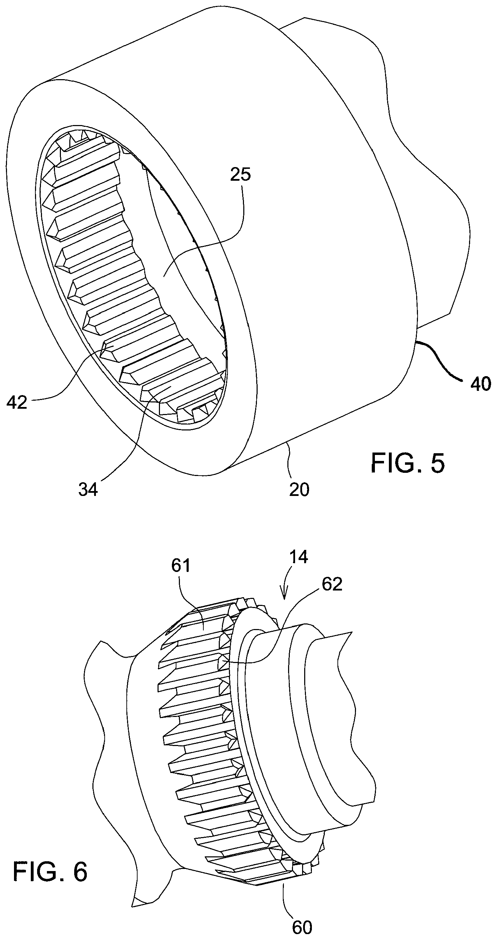

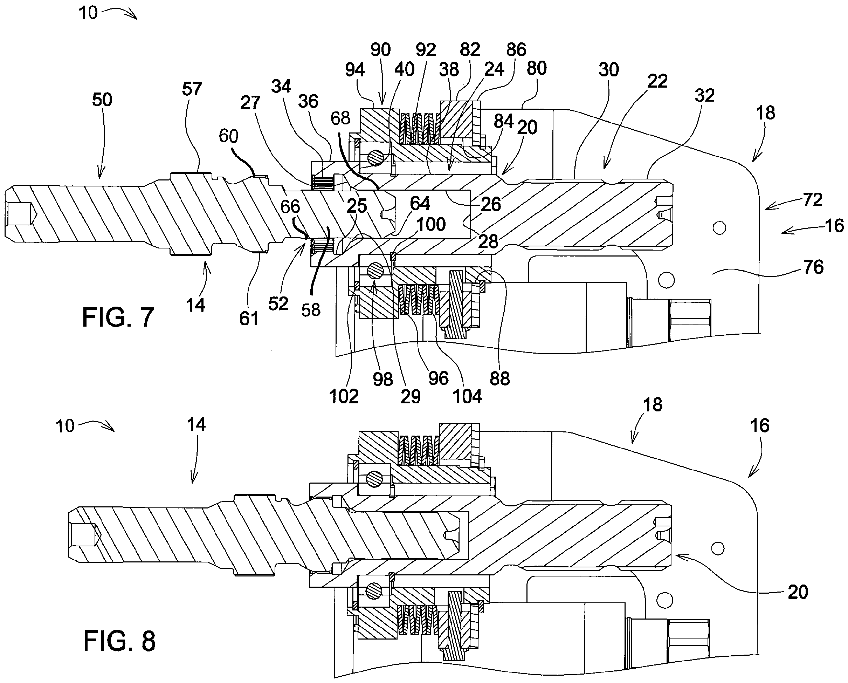

As best seen in Figs. 3, 5 and 7, the PTO adapter shaft 20 has a solid output end 22 and a hollow input end 24 penetrated by a first bore 25 and a second blind bore 26. Second blind bore 26 extends away from PTO stub shaft 14 to an end wall 28 which faces towards the PTO stub shaft 14. External splines 30 and 32 are formed on the output end 22. First bore 25 forms internal splines 34. The second blind bore 26 extends from the first bore 25 to the end wall 28. The first bore 25 has a larger diameter and the second blind bore 26 has a smaller diameter. Input end 24 has a larger diameter end portion 36 joined to a smaller diameter portion 38 by an annular wall 40 which faces away from PTO stub shaft 14. As best seen in Fig. 5, each internal spline 34 has an outer end 42 which is tapered. As best seen in Fig. 7, first bore 25 is connected to second blind bore 26 by an outer frustoconical wall or outer tapered bore portion 27 and an inner frustoconical wall or inner tapered bore portion 29.

As best seen in Figs. 2, 4 and 6, the PTO stub shaft 14 has a solid input portion 50 and a solid output portion 52. Input portion 50 includes a smaller diameter shaft portion 54 which extends outwardly and away from a larger diameter portion 56 with external splines 57. Output portion 52 includes a smaller diameter shaft portion 58 which extends outwardly and away from a larger diameter portion 60 with external splines 61. As best seen in Fig. 6, each external spline 61 has an outer end 62 which is tapered. A chamfer 64 is formed on the outer end of smaller diameter shaft portion 58. The chamfer 64 can engage the tapered bore portions 27 and 29 to help align and guide the PTO stub shaft 14 into the PTO adapter shaft 20. As best seen in Fig. 4, the smaller diameter shaft portion 58 includes first and second journals 66 and 68 formed thereon. The first journal 66 is spaced axially apart from the second journal 68 which is adjacent the chamfer 64. The first and second journals 66 and 68 are slidably received by the second blind bore 26 of the PTO adapter shaft 20.

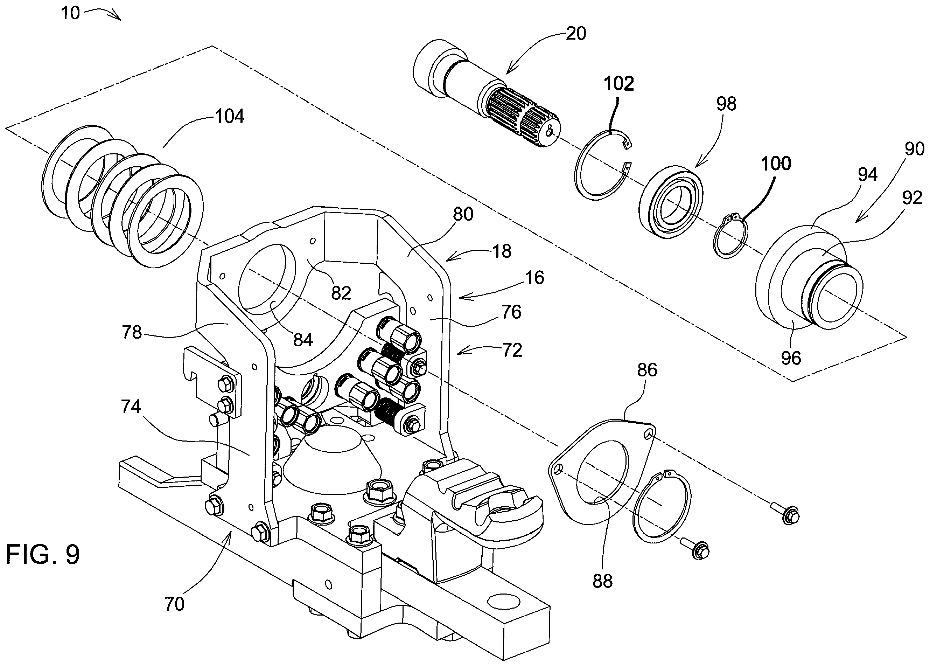

Referring now to Fig. 1, 7 and 9, the coupler frame 18 includes a pair of side plates 70 and 72 with vertical legs 74 and 76, and with upper legs 78 and 80, each projecting forwardly from an upper end of a corresponding one of the vertical legs 74 and 76. A center leg 82 extends between and is supported by forward ends of upper legs 78 and 80. Center leg 82 includes a circular opening 84. A retainer plate 86 is attached to a rear side of center leg 82. Retainer plate 86 includes an opening 88 which is slightly smaller than circular opening 84.

A hollow cylindrical holder 90 is received by opening 88 and slidably and pivotally engages the retainer plate 86. Holder 90 includes a smaller diameter main body 92 and a larger diameter front flange 94 which forms a rearwardly facing annular wall 96. The PTO adapter shaft 20 is received by the holder 90 and is supported within the holder 90 by annular bearing 98. Annular bearing 98 is held between annular wall 40 and a snap ring 100. A snap ring 102 retains the annular bearing 98 within the holder 90. Thus, the PTO adapter shaft 20 is fixed axially with respect to the holder 90, but it can rotate within the holder 90. Because opening 88 is slightly smaller than circular opening 84, the holder 90 and the PTO adapter shaft 20 are allowed to move radially with respect to the coupler frame 18 to aid in self-aligning the PTO adapter shaft 20 with respect to the PTO stub shaft 14. As a result, the holder 90 and the PTO adapter shaft 20 are pivotal with respect to the coupler frame 18 in directions perpendicular with respect to the longitudinal axis of the PTO adapter shaft 20.

An annular resilient member 104, such as a stack of annular Belleville springs, is mounted around the smaller diameter main body 92 between annular wall 96 and center leg 82. Annular resilient member 104 is biased to urge the holder 90 and the PTO adapter shaft 20 towards the PTO stub shaft 14.

To use the coupling assembly 10, the standard PTO drive shaft (not shown) on the tractor is replaced by the PTO stub shaft 14. The two tightly tolerance first and second journals 66 and 68, chamfer 64 and tapered bore portions 27 and 29 allow the PTO adapter shaft 20 to slide on the first and second journals 66 and 68 and align the PTO adapter shaft 20 with the PTO stub shaft 14. The second blind bore 26 of PTO adapter shaft 20 has a tight tolerance and is mounted in the coupler frame 18 on an implement socket used with tractor pickup hitch 10. The pickup hitch 10 pulls in the PTO adapter shaft 20 towards the PTO stub shaft 14. The PTO adapter shaft 20 is allowed to float in the coupler frame 18 so that it can be coaxially aligned with the PTO stub shaft 14. The final step is to engage the external splines 61 on the PTO stub shaft 14 with the internal splines 34 in the PTO adapter shaft 20. The splines 34 and 61 have tapered outer ends 42 and 62 to prevent a tooth butting condition. Since the PTO adapter shaft 20 and the PTO stub shaft 14 are concentric due to the first and second journals 66 and 68, indexing the splines 34 and 61 is very easy. If the splines 34 ad 61 were not to index, the annular resilient member 104 will compress to prevent damage. Once rotation has started, the annular resilient member 104 will force the PTO adapter shaft 20 onto the PTO stub shaft 14.

## Claims

1. A coupling assembly for connecting an implement propeller shaft to a PTO drive of a tractor, comprising a PTO adapter shaft (20), the PTO adapter shaft (20) having a first bore (25) which forms internal splines (34) and having a second blind bore (26) extending from the first bore (25) to an end wall (28) which faces towards the first bore (25), the first bore (25) having a larger diameter and the second blind bore (26) having a smaller diameter; and a PTO stub shaft (14), the PTO stub shaft (14) having a larger diameter shaft portion (60) with external splines (61) for meshing engagement with the internal splines (34) of the PTO adapter shaft (20), and having a smaller diameter shaft portion (58) extending away from the larger diameter shaft portion (60), **characterized in that** the smaller diameter shaft portion (58) having an outer end with a chamfer (64) and first and second journals (66, 68) formed thereon, the first journal (66) being spaced axially apart from the second journal (68), the first and second journals (66, 68) being slidably received by the second blind bore (26), wherein the first bore (25) is connected to the second blind bore (26) by an outer tapered bore portion (27) and an inner tapered bore portion (29).

2. The coupling assembly according to claims 1, **characterized in that** the internal splines (34) have tapered outer ends (42) which face the external splines (61), and the external splines (61) have tapered outer ends (62) which face the internal splines (34).

3. The coupling assembly according to one of claims 1 or 2, **characterized by** further comprising a coupler frame (18) adapted to be attached to an implement, an hollow cylindrical holder (90) mounted to the coupler frame (18), the hollow cylindrical holder (90) receiving and rotatably supporting the PTO adapter shaft (20), the hollow cylindrical holder (90) and the PTO adapter shaft (20) being slidable with respect to the coupler frame (18) along the longitudinal axis of the PTO adapter shaft (20), and an annular resilient member (104) coupled between the coupler frame (18) and the hollow cylindrical holder (90), the annular resilient member (104) being biased to urge the hollow cylindrical holder (90) and the PTO adapter shaft (20) towards the PTO stub shaft (14).

4. The coupling assembly according to one of claims 1 to 4, **characterized by** further comprising a coupler frame (18) adapted to be attached to an implement, a hollow cylindrical holder (90) mounted to the coupler frame (18), the hollow cylindrical holder (90) receiving and rotatably supporting the PTO adapter shaft (20), the hollow cylindrical holder (90) and the PTO adapter shaft (20) being pivotal with respect to the coupler frame (18) in directions perpendicular with respect to the longitudinal axis of the PTO adapter shaft (20), and an annular resilient member (104) coupled between the coupler frame (18) and the hollow cylindrical holder (90), the annular resilient member (104) being biased to urge the hollow cylindrical holder (90) and the PTO adapter shaft (20) towards the PTO stub shaft (14).

5. The coupling assembly according to claim 3 or 4, **characterized in that** the hollow cylindrical holder (90) has a smaller diameter main body (92) and a larger diameter front flange (94) which forms an annular wall (96) which engages the annular resilient member (104).

6. The coupling assembly according to claim 5, **characterized in that** the annular resilient member (104) is mounted around the smaller diameter main body (92).

## Patentansprüche

1. Kupplungsanordnung zum Verbinden einer Geräteantriebswelle mit einem Zapfwellen(PTO - power take-off)-Antrieb eines Traktors, Folgendes umfassend: eine Zapfwellenverlängerung (20), wobei die Zapfwellenverlängerung (20) eine erste Bohrung (25) aufweist, die innenliegende Keilwellennuten (34) ausbildet, und eine zweite, nicht durchgehende Bohrung (26) aufweist, die sich von der ersten Bohrung (25) hin zu einer Stirnwand (28) erstreckt, die der ersten Bohrung (25) zugewandt ist, wobei die erste Bohrung (25) einen größeren Durchmesser aufweist und die zweite, nicht durchgehende Bohrung (26) einen kleineren Durchmesser aufweist; und eine Zapfwellen-Flanschwelle (14), wobei die Zapfwellen-Flanschwelle (14) einen Wellenabschnitt mit einem größeren Durchmesser (60) mit außenliegenden Keilwellennuten (61) für einen Zahneingriff mit den innenliegenden Keilwellennuten (34) der Zapfwellenverlängerung (20) aufweist und einen Wellenabschnitt mit einem kleineren Durchmesser (58), der sich von dem Wellenabschnitt mit dem größeren Durchmesser (60) weg erstreckt, aufweist, **dadurch gekennzeichnet, dass** der Wellenabschnitt mit dem kleineren Durchmesser (58) ein äußeres Ende mit einer Anschrägung (64) und daran ausgebildeten ersten und zweiten Lagern (66, 68) aufweist, wobei das erste Lager (66) von dem zweiten Lager (68) axial beabstandet ist, das erste und zweite Lager (66, 68) von der zweiten, nicht durchgehenden Bohrung (26) verschiebbar aufgenommen werden, wobei die erste Bohrung (25) mit der zweiten, nicht durchgehenden Bohrung (26) durch einen äußeren sich verjüngenden Bohrungsabschnitt (27) und einen inneren sich verjüngenden Bohrungsabschnitt (29) verbunden ist.

2. Kupplungsanordnung nach Anspruch 1, **dadurch gekennzeichnet, dass** die innenliegenden Keilwellennuten (34) sich verjüngende äußere Enden (42) aufweisen, die den außenliegenden Keilwellennuten (61) zugewandt sind, und die außenliegenden Keilwellennuten (61) sich verjüngende äußere Enden (62) aufweisen, die den innenliegenden Keilwellennuten (34) zugewandt sind.

3. Kupplungsanordnung nach einem der Ansprüche 1 oder 2, **dadurch gekennzeichnet, dass** sie ferner Folgendes umfasst: einen Kupplungsrahmen (18), angepasst, um an einem Gerät befestigt zu werden, eine hohle zylindrische Halterung (90), die an dem Kupplungsrahmen (18) angebracht ist, wobei die hohle zylindrische Halterung (90) die Zapfwellenverlängerung (20) aufnimmt und drehbar stützt, wobei die hohle zylindrische Halterung (90) und die Zapfwellenverlängerung (20) bezogen auf den Kupplungsrahmen (18) entlang der Längsachse der Zapfwellenverlängerung (20) verschiebbar sind, und ein ringförmiges elastisches Element (104), das zwischen den Kupplungsrahmen (18) und die hohle zylindrische Halterung (90) gekoppelt ist, wobei das ringförmige elastische Element (104) vorgespannt ist, um die hohle zylindrische Halterung (90) und die Zapfwellenverlängerung (20) in Richtung auf die Zapfwellen-Flanschwelle (14) zu drücken.

4. Kupplungsanordnung nach einem der Ansprüche 1 bis 4, **dadurch gekennzeichnet, dass** sie ferner Folgendes umfasst: einen Kupplungsrahmen (18), der angepasst ist, an einem Gerät befestigt zu werden, eine hohle zylindrische Halterung (90), die an dem Kupplungsrahmen (18) angebracht ist, wobei die hohle zylindrische Halterung (90) die Zapfwellenverlängerung (20) aufnimmt und drehbar stützt, wobei die hohle zylindrische Halterung (90) und die Zapfwellenverlängerung (20) bezogen auf den Kupplungsrahmen (18) in Richtungen schwenkbar sind, die senkrecht zur Längsachse der Zapfwellenverlängerung (20) stehen, und ein ringförmiges elastisches Element (104), das zwischen den Kupplungsrahmen (18) und die hohle zylindrische Halterung (90) gekoppelt ist, wobei das ringförmige elastische Element (104) vorgespannt ist, um die hohle zylindrische Halterung (90) und die zapfwellenverlängerung (20) in Richtung auf die Zapfwellen-Flanschwelle (14) zu drücken.

5. Kupplungsanordnung nach Anspruch 3 oder 4, **dadurch gekennzeichnet, dass** die hohle zylindrische Halterung (90) einen Hauptkörper mit einem kleineren Durchmesser (92) und einen vorderen Flansch mit einem größeren Durchmesser (94) aufweist, der eine ringförmige Wand (96) ausbildet, die in das ringförmige elastische Element (104) eingreift.

6. Kupplungsanordnung nach Anspruch 5, **dadurch gekennzeichnet, dass** das ringförmige elastische Element (104) um den Hauptkörper mit dem kleineren Durchmesser (92) herum angebracht ist.

## Revendications

1. Ensemble de couplage pour connecter un arbre de transmission d'outil à un entraînement à PTO d'un tracteur, comprenant un arbre adaptateur à PTO (20), l'arbre adaptateur à PTO (20) ayant un premier alésage (25) qui forme des cannelures internes (34) et ayant un second alésage borgne (26) s'étendant depuis le premier alésage (25) jusqu'à une paroi d'extrémité (28) qui est tournée vers le premier alésage (25), le premier alésage (25) ayant un diamètre plus grand et le second alésage borgne (26) ayant un diamètre plus petit ; et un arbre tronqué à PTO (14), l'arbre tronqué à PTO (14) ayant une portion d'arbre de diamètre plus grand (60) avec des cannelures externes (61) pour l'entrée en prise par engrènement avec les cannelures internes (34) de l'arbre adaptateur à PTO (20), et ayant une portion d'arbre de diamètre plus petit (58) s'éloignant, en s'étendant, de la portion d'arbre de diamètre plus grand (60), **caractérisé en ce que** la portion d'arbre de diamètre plus petit (58) a une extrémité extérieure avec un chanfrein (64) et des premier et second tourillons (66, 68) formés sur celle-ci, le premier tourillon (66) étant espacé axialement du second tourillon (68), les premier et second tourillons (66, 68) étant reçus de façon coulissante par le second alésage borgne (26), dans lequel le premier alésage (25) est raccordé au second alésage borgne (26) par une portion d'alésage tronconique extérieure (27) et une portion d'alésage tronconique intérieure (29).

2. Ensemble de couplage selon revendications 1, **caractérisé en ce que** les cannelures internes (34) ont des extrémités extérieures tronconiques (42) qui font face aux cannelures externes (61), et les cannelures externes (61) ont des extrémités extérieures tronconiques (62) qui font face aux cannelures internes (34).

3. Ensemble de couplage selon une des revendications 1 ou 2, **caractérisé en ce qu'**il comprend en outre un cadre coupleur (18) adapté pour être attaché à un outil, un support cylindrique creux (90) monté sur le cadre coupleur (18), le support cylindrique creux (90) recevant et supportant de façon rotative l'arbre adaptateur à PTO (20), le support cylindrique creux (90) et l'arbre adaptateur à PTO (20) pouvant coulisser par rapport au cadre coupleur (18) le long de l'axe longitudinal de l'arbre adaptateur à PTO (20), et un organe résilient annulaire (104) couplé entre le cadre coupleur (18) et le support cylindrique creux (90), l'organe résilient annulaire (104) étant sollicité pour pousser le support cylindrique creux (90) et l'arbre adaptateur à PTO (20) vers l'arbre tronqué à PTO (14).

4. Ensemble de couplage selon une des revendications 1 à 4, **caractérisé par** comprenant en outre un cadre coupleur (18) adapté pour être attaché à un outil, un support cylindrique creux (90) monté sur le cadre coupleur (18), le support cylindrique creux (90) recevant et supportant de façon rotative l'arbre adaptateur à PTO (20), le support cylindrique creux (90) et l'arbre adaptateur à PTO (20) étant pivotants par rapport au cadre coupleur (18) en directions perpendiculaire par rapport à l'axe longitudinal de l'arbre adaptateur à PTO (20), et un organe résilient annulaire (104) couplé entre le cadre coupleur (18) et le support cylindrique creux (90), l'organe résilient annulaire (104) étant sollicité pour pousser le support cylindrique creux (90) et l'arbre adaptateur à PTO (20) vers l'arbre tronqué à PTO (14).

5. Ensemble de couplage selon la revendication 3 ou 4, **caractérisé en ce que** le support cylindrique creux (90) a un corps principal de diamètre plus petit (92) et une bride avant de diamètre plus grand (94) qui forme une paroi annulaire (96) qui entre en prise avec l'organe résilient annulaire (104).

6. Ensemble de couplage selon la revendication 5, **caractérisé en ce que** l'organe résilient annulaire (104) est monté autour du corps principal de diamètre plus petit (92).
